# EUROPEAN PATENT APPLICATION

(11) **EP 1 512 522 A2**
(43) Date of publication of application: **09.03.2005**
(21) Application number: 04021032.0
(22) Date of filing: 03.09.2004
(51) Int. Cl.: B29D 17/00, B29C 35/00, B29C 65/00

(54) **Method for manufacturing optical recording medium**

(30) Priority: 04.09.2003 JP 2003312779
(71) Applicant: TDK Corporation, Tokyo 103-8272 (JP)
(72) Inventor: Komaki, Tsuyoshi, Tokyo 103-8272 (JP)
(74) Representative: Wagner, Karl H., Dipl.-Ing.

(57) **Abstract**

A method for manufacturing an optical recording medium (10) is provided, which can suppress the amount of eccentricity of a central hole (10A) to be small and can form a light transmitting layer (14) with a uniform thickness even in a region around the central hole (10A). In this manufacturing method, a manufacturing hole (12B) having a smaller inner diameter than that of the central hole (10A) is formed in a substrate (12). A core member (20) is fitted into the manufacturing hole (12B) to be in close contact with the inner circumference of the manufacturing hole (12B). A light transmitting layer (14) is spread over an information recording surface (12A) of the substrate by supplying radiation curable resin in a region around the core member (20) and rotating the substrate (12). Then, the light transmitting layer (14) is cured by irradiation of radiation, and the core member (20) is removed from the manufacturing hole (12B). Thereafter the central hole (10A) is formed.

## Description

The present invention relates to a method for manufacturing an optical recording medium in which a light transmitting layer is formed on a side of a substrate, which is a side closer to an information recording surface, so as to be thinner than the substrate.

In recent years, optical recording media such as CDs (Compact Disc), DVDs (Digital Versatile Disc), and the like, have spread rapidly. Typical optical media have an outer diameter of 120 mm and a thickness of 1.2 mm that are standardized. For a DVD, laser light having a shorter wavelength than that for a CD is used as illumination light and numerical aperture of a lens for the illumination light is made larger than that for a CD. Thus, s DVD enables the larger amount of information to be recorded and reproduced with higher density, as compared with CDs.

On the other hand, there is a tendency that precision of recording or reproducing the information is degraded as the wavelength of the illumination light becomes shorter and the numerical aperture of the lens becomes larger. This is because coma aberration is generated because of a tilt (warp) of the disc. In order to overcome the above problem, a DVD employs a light transmitting layer having a thickness of 0.6 mm, which is a half of that in a CD, so as to ensure margin for the tilt (warp) of the disc, thereby maintaining the precision of the recording and reproducing information.

However, the light transmitting layer having a thickness of 0.6 mm cannot provide sufficient stiffness and strength by itself to DVD. Thus, a DVD is formed by bonding two substrates having a thickness of 0.6 mm to each other with their information recording surfaces arranged inside so as to have a total thickness of 1.2 mm that is the same as CD. In this manner, in a DVD, the stiffness and strength that are substantially equal to those of a CD are ensured.

Moreover, an optical recording medium typically has a central hole (ϕ = 15 mm in CDs and DVDs, for example). The central hole is formed simultaneously with a molding process in which a substrate is molded to be a circular disk, and is used not only for positioning the optical recording medium in a recording and reproducing apparatus but also for transfer, storage and the like, of the optical recording medium in a manufacturing process.

In order to achieve recording of the larger amount of information with higher recording density, an optical recording medium has now drawn attention, for which the wavelength of the illumination light is made further shorter and the numerical aperture of the lens is further increased.
In this optical recording medium, a further thinner light transmitting layer is formed in accordance with the shorter wavelength of the illumination light and the increased numerical aperture (see Japanese Patent Laid-Open Publication No. 2003-85836, for example). Especially, in order to standardize the specification, an optical recording medium has spread, for which blue-violet laser light having a wavelength of 405 nm is used as illumination light and the numerical aperture is set to 0.85, and which includes a light transmitting layer having a thickness of 0.1 mm in accordance with these conditions. In order to keep precision of recording and reproducing information favorable, it is demanded that variation of the thickness of the light transmitting layer be ±2 µm or less, that is, a difference between the minimum thickness and the maximum thickness be 4 µm or less.

As a method for forming such a thin light transmitting layer that is as thin as 0.1 mm, the following methods are considered. One method is to bond a film of polycarbonate or the like to a substrate. Another method is to spread a resin that can be cured by radiation such as UV (ultraviolet) rays or electron beams, on a substrate by spin-coating and then cure that resin by irradiating radiation. The latter method is preferable for forming a light transmitting layer because that method is good in production efficiency, can be performed at a lower cost, can provide a good tracking performance, and the like.

However, when the spin-coating method is adopted to a substrate having a central hole formed therein, the thickness of the light transmitting layer is liable to become uneven. Thus, the recording and reproducing of the information with high density may be difficult to perform.

The reason why the thickness of the light transmitting layer becomes uneven is not clear. However, that reason is generally speculated as follows. When a resin was supplied to a region surrounding the central hole, centrifugal force acts on the resin immediately because of rotation of the substrate. Thus, the resin flows from the supplied position outward in a radial direction so as to spread over the substrate. In this manner, the resin forms the light transmitting layer and excess amount of the resin further flows outward in the radial direction. While the resin flows outward in the radial direction, centrifugal force continues to act on the resin. Therefore, the excess amount of resin is run out in an inner region in the radial direction, which is near the supplied position, relatively rapidly. On the other hand, in an outer region, the excess amount of resin is continuously supplied from the inner region. Thus, it takes a longer time to run out the resin there. Therefore, the thickness of the resultant layer does not become uniform. That is, the resultant layer is thinner in the inner region than in the outer region. In order to prevent the resultant layer in the inner region from becoming thinner, it is considered that the resin is additionally supplied to the inner region. However, in this case, control has to be done with high precision in accordance with variation in the thickness of the resultant layer. It is practically impossible to perform such control.

On the other hand, in a case where no central hole is formed in the substrate, it is possible to supply a resin to the center of the substrate or a region that is inner in the radial direction as compared with a case where the central hole is formed. Thus, the resin can be spread to have a uniform thickness. In this case, after the spread resin was cured, the central hole can be punched out in the light transmitting layer and the substrate by means of a tool.

Moreover, in order to form the light transmitting layer having the uniform thickness, a method is known in which the central hole is formed when the substrate is.molded; the central hole is then blocked with a blocking member; and radiation curable resin is supplied to the blocking member and is spread by spin-coating.

However, the substrate having no central hole is difficult to transfer, store and the like, in the manufacturing process of the optical recording medium and therefore decreases the production efficiency. Moreover, it is difficult to position the substrate having no central hole with high precision. In addition, when the central hole is formed, the amount of eccentricity of the central hole with respect to grooves or pits may become large.

On the other hand, in a case of using the blocking member, the blocking member blocks the central hole and also covers a region of the substrate that surrounds the central hole. Thus, the light transmitting layer cannot be formed in the region surrounding the central hole.

Moreover, when the blocking member is removed from the substrate, an inner circumferential edge of the light transmitting layer may be damaged. For example, when the blocking member is removed from the substrate by being moved up before irradiation of UV rays or the like, the resin may become thready or the like, thus spoiling the appearance of the inner circumferential edge of the light transmitting layer. On the other hand, when the blocking member is removed from the substrate by being moved up after irradiation of UV rays or the like, the blocking member may not be easily separated from the substrate because the resin surrounding the blocking member is cured and causes the blocking member to adhere to the substrate. In this case, if the blocking member is separated from the substrate forcedly, the inner circumferential edge of the light transmitting layer may be chipped or broken, or peel off from the substrate.

In view of the foregoing problems, various exemplary embodiments of this invention provide a method for manufacturing an optical recording medium that can suppress the amount of eccentricity of a center hole to be small and can form a light transmitting layer in a region surrounding the central hole to be a uniform thickness.

According to one exemplary embodiment of this invention, a method for manufacturing comprises the steps of: forming a manufacturing hole for use in manufacturing having a smaller inner diameter than a central hole in a substrate; fitting a core member into the manufacturing hole to come into close contact with an inner circumference of the manufacturing hole; spreading a light transmitting layer on an information recording surface by supplying a radiation curable resin to a region around the core member and by rotating the substrate; curing the light transmitting layer by irradiating radiation; and removing the core member from the manufacturing hole to form a central hole. In this manner, the aforementioned objects can be solved.

In summary, the above-described objectives are achieved by the following aspects of the present invention.
(1) A method for manufacturing an optical recording medium including a substrate having at least one surface serving as an information recording surface, and a light transmitting layer that is thinner than the substrate and is formed on the information recording surface, the optical recording medium having a central hole, the method comprising the steps of: horizontally arranging a substrate having a manufacturing hole that is formed at a center thereof and has a smaller inner diameter than that of the central hole with the information recording surface faced up, fitting a core member into the manufacturing hole to bring the core member into close contact with an inner circumference of the manufacturing hole, supplying a radiation curable resin that is fluid and is able to transmit light to a region around the core member, and rotating the substrate, thereby causing the radiation curable resin to flow outward in a radial direction by centrifugal force to spread a light transmitting layer on the information recording surface; curing the spread light transmitting layer by irradiation of radiation; and removing the core member from the manufacturing hole and forming the central hole.
(2) The method for manufacturing an optical recording medium according to (1), wherein the core member has elasticity and has a shape that allows the core member to be fitted into the manufacturing hole freely in its original state, and the core member is brought into close contact with the inner circumference of the manufacturing hole by being elastically deformed.
(3) The method for manufacturing an optical recording medium according to (1) or (2), wherein the manufacturing hole has an inner diameter of 10 mm or less.
(4) The method for manufacturing an optical recording medium according to (1) or (2), wherein the manufacturing hole has an inner diameter of 8 mm or less.
(5) The method for manufacturing an optical recording medium according to any one of (1) to (4), wherein the manufacturing hole has the inner diameter of 3 mm or more.

Please note that the term "radiation" is generally used to mean an electromagnetic wave and a particle beam that are radiated by decay of radioactive element, such as γ-ray, X-ray, α-ray or the like. However, the term "radiation" herein is used as a general term of an electromagnetic wave and a particle beam that have a nature for curing a specific resin that is fluid, such as UV rays, and electron beams.

According to the exemplary embodiment of this invention, since the manufacturing hole is formed in the substrate, it is easy to transfer and store the substrate in a manufacturing process. Moreover, since the substrate can be positioned by using the manufacturing hole as a reference, the amount of eccentricity of the central hole can be suppressed to be small. In addition, since the radiation curable resin is supplied to the region surrounding the manufacturing hole that has a smaller inner diameter than the central hole (surrounding the core member that comes into close contact with the inner circumference of the manufacturing hole), the light transmitting layer can be spread and formed with a uniform thickness. Even if a flash is generated around the core member or the light transmitting layer peels off in the region surrounding the manufacturing hole when the core member is removed, the flash or the region in which the light transmitting layer peeled off is removed because the central hole having a larger inner diameter than that of the manufacturing hole. Therefore, it is possible to surely form the light transmitting layer having a uniform thickness even in the region surrounding the central hole.

Various exemplary embodiments of the present invention will be described in detail with reference to the accompanying drawings, wherein:
Fig. 1 shows a side cross-sectional view of the configuration of an optical recording medium manufactured in an exemplary embodiment of the present invention;
Fig. 2 is a flowchart generally showing a manufacturing process of the above optical recording medium;
Fig. 3 shows a side cross-sectional view of the configuration of a substrate in the manufacturing process of the above optical recording medium;
Fig. 4 shows a side cross-sectional view schematically showing a state in which a core member is inserted into a manufacturing hole of the substrate;
Fig. 5 shows a side cross-sectional view schematically showing a state in which the core member is brought into close contact with the manufacturing hole of the substrate;
Fig. 6 shows a side cross-sectional view schematically showing a state in which a resin is supplied to the substrate;
Fig. 7 shows a side cross-sectional view schematically showing a process in which the resin is spread on the substrate;
Fig. 8 shows a side cross-sectional view schematically showing a state in which a light transmitting layer is spread on the substrate;
Fig. 9 shows a side cross-sectional view schematically showing a curing process for curing the light transmitting layer;
Fig. 10 shows a side cross-sectional view schematically showing a process for removing the core member;
Fig. 11 shows a side cross-sectional view schematically showing a process for forming a central hole.

Various exemplary embodiments of this invention will be hereinafter described in detail with reference to the drawings.

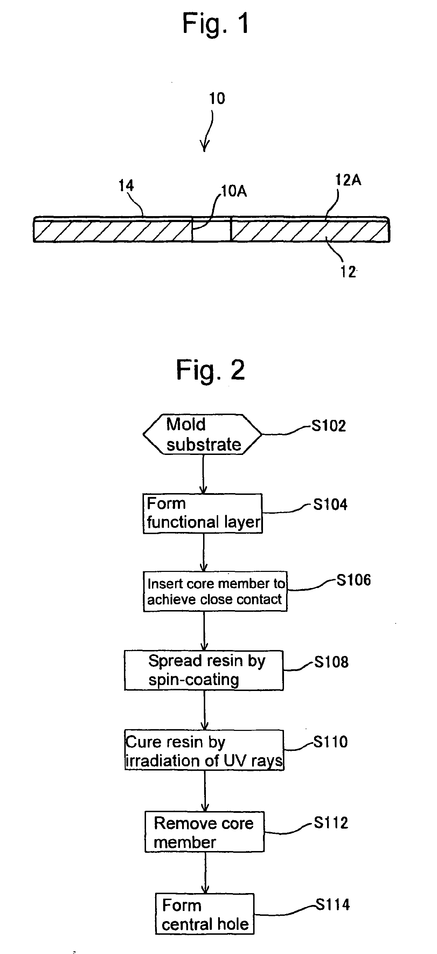

In the present exemplary embodiment, a method for manufacturing an optical recording medium 10 shown in Fig. 1 has a feature. However, in order to help the reader understand the present exemplary embodiment, first the structure of the optical recording medium 10 is briefly described.

The optical recording medium 10 includes a substrate 12 having a surface serving as an information recording surface 12A, and a light transmitting layer 14 that is formed on the information recording surface 12A to be thinner than the substrate 12. The optical recording medium 10 is a circular disk having an outer diameter of approximately 120 mm and a thickness of approximately 1.2 mm, and has a central hole 10A having an inner diameter of approximately 15 mm.

The substrate 12 is formed of a resin such as polycarbonate, acrylic resin, epoxy resin, and has a thickness of approximately 1.1 mm. In the information recording surface 12A of the substrate 12 are formed fine concave and convex portions (not shown) for carrying information, such as pits and grooves. Please note that, although the terms "pits" and "grooves" are generally used to mean concave portions for carrying information, those terms are used herein to mean not only the concave portions but also convex portions for carrying information for convenience.

On the information recording surface 12A, a functional layer is formed. However, because the functional layer is thinner than the light transmitting layer 14 and appears to be needless to understand the present invention, the functional layer is not shown in the drawings. For example, in the case where the optical recording medium 10 is a ROM (Read Only Memory) type disc, a reflection layer of Al, Ag, Au or the like is formed as the functional layer on the information recording surface 12A. In the case of an RW (Re-Writable) type disc, a recording layer made of a phase change material, a magneto-optical material or the like, is formed in addition to the reflection layer. In the case of an R (Recordable) type disc, a recording layer made of phase change material or including organic dye is formed in addition to the reflection layer.

The light transmitting layer 14 is formed on the functional layer and has a thickness of approximately 0.1 mm. The light transmitting layer 14 is formed of a material that can be cured by radiation and can transmit light, for example, acrylic UV curable resin or epoxy UV curable resin.

Next, a manufacturing method of the optical recording medium 10 will be described with reference to a flowchart shown in Fig. 2 and other drawings.

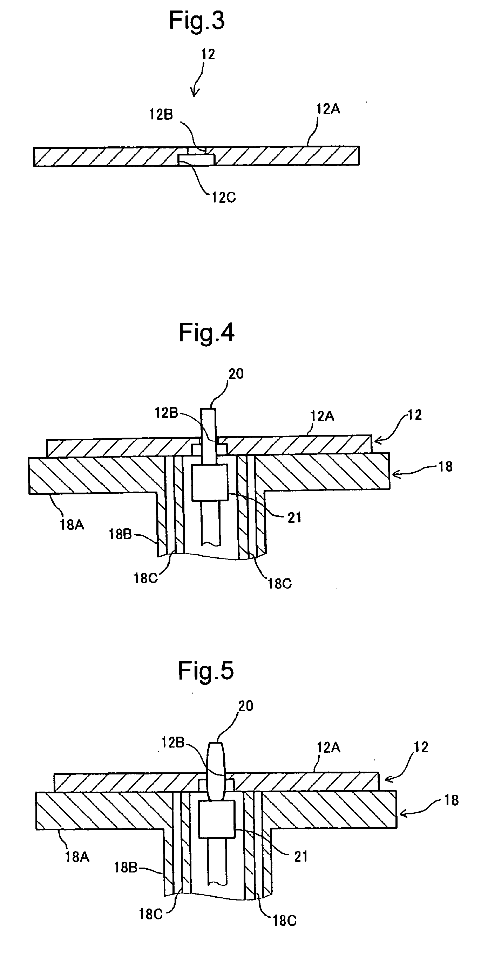

First, a substrate 12 in the form of a circular disc having an outer diameter of approximately 120 mm and a thickness of approximately 1.1 mm, shown in Fig. 3, is molded by injection molding (Step S102). In this molding, a manufacturing hole 12B for use in manufacturing, having a smaller inner diameter than that of the aforementioned central hole 10A is formed in the substrate 12. In order to spread the light transmitting layer to have a uniform thickness in a process for spreading the light transmitting layer (described later), it is preferable that the manufacturing hole 12B have an inner diameter of 10 mm or less. In the case of an inner diameter of 5mm or less, the light transmitting layer in which the uniformity of the thickness is further improved can be formed. On the other hand, the inner diameter of the manufacturing hole 12B is preferably 3 mm or more, considering the molding of the substrate 12 by injection molding, for example.

In addition, in the injection molding, fine concave and convex portions for carrying information, such as pits and grooves, are transferred onto the information recording surface 12A that is one surface of the substrate 12.. Moreover, in an opposite surface to the information recording surface 12A, a circular concave portion 12C having an inner diameter which is equal to that of the central hole 10A is formed.

After the injection molding, a plurality of substrates 12 are usually stored or transferred while being stacked. For example, by inserting a guide in the form of a round bar or the like, into the manufacturing hole 12B, it is easy to stack a plurality of substrates 12 while they are aligned. This makes the storage or transfer of the substrates easier, thus improving production efficiency.

On the information recording surface 12A of the substrate 12, a functional layer (not shown) is formed by sputtering, deposition, or the like (Step S104).

Then, as shown in Fig. 4, while a core member 20 is inserted into the manufacturing hole 12B, the substrate 12 is placed on a rotating table 18 horizontally.

The rotating table 18 has a structure in which a shaft 18B projects downward from a table part 18A in the form of a circular disk placed horizontally. Within the shaft 18B, a vent hole 18C is formed to be in communication with the table part 18A. The shaft 18B is engaged with a rotating driving mechanism that is not shown. Moreover, to the vent hole 18C, a negative-pressure supply that is not shown is connected.

The core member 20 is formed of a silicone resin, a fluororesin, an acrylic resin, an olefin resin, or a mixture of them, and has elasticity. The core member 20 is a round bar having an outer diameter slightly smaller than the inner diameter of the manufacturing hole 12B in its original state, and can be fitted into the manufacturing hole 12B freely.

Moreover, the core member 20 is supported by a compression/release mechanism 21 at a portion near its lower end, and is configured in such a manner that the outer diameter is increased when the compression/release mechanism 21 compresses the core member 20 in an axial direction, thereby the core member 20 comes into close contact with the inner circumference of the manufacturing hole 12B.

First, as shown in Fig. 5, the core member 20 is compressed in the axial direction by the compression/release mechanism 21 so as to come into close contact with the inner circumference of the manufacturing hole 12B (Step S106). Then, a negative pressure is supplied to an upper surface of the table part 18A so as to absorb the substrate 12 and fix it onto the rotating table 18.

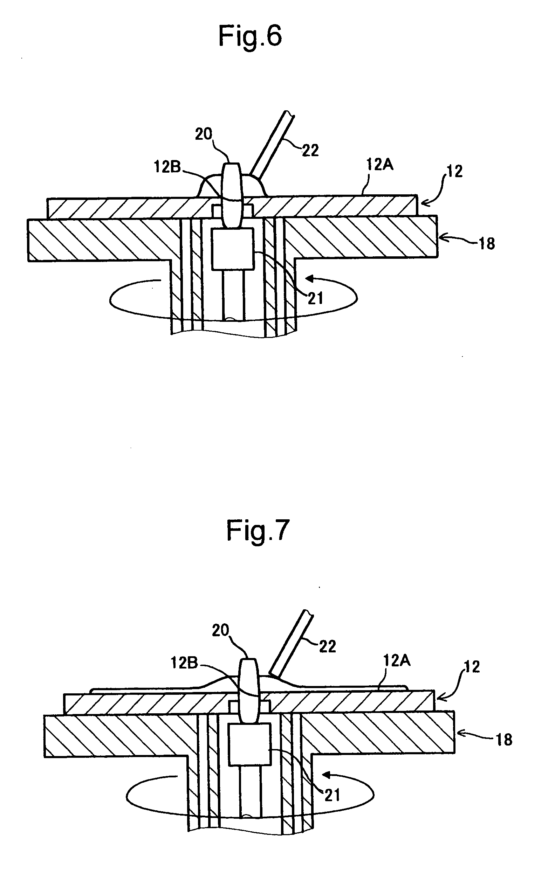

Then, as shown in Fig. 6, while the rotating table 18 is rotated, a nozzle 22 is brought close to a region surrounding the core member 20 and a predetermined amount of radiation curable resin, that is fluid, is supplied onto the substrate 12 from the nozzle 22. Please note that the radiation curable resin does not enter a gap between the core member 20 and the substrate 12 because the core member 20 is in close contact with the manufacturing hole 12B.

As shown in Fig. 7, the radiation curable resin thus supplied is spread outward in a radial direction by centrifugal force. At this time, centrifugal force hardly acts on the resin in the vicinity of the manufacturing hole 12B having a smaller inner diameter than that of the central hole 10A. Therefore, the region in the vicinity of the manufacturing hole 12B serves as reservoir of resin, and buffers and stabilizes the amount of the flowing resin on the information recording surface 12A.

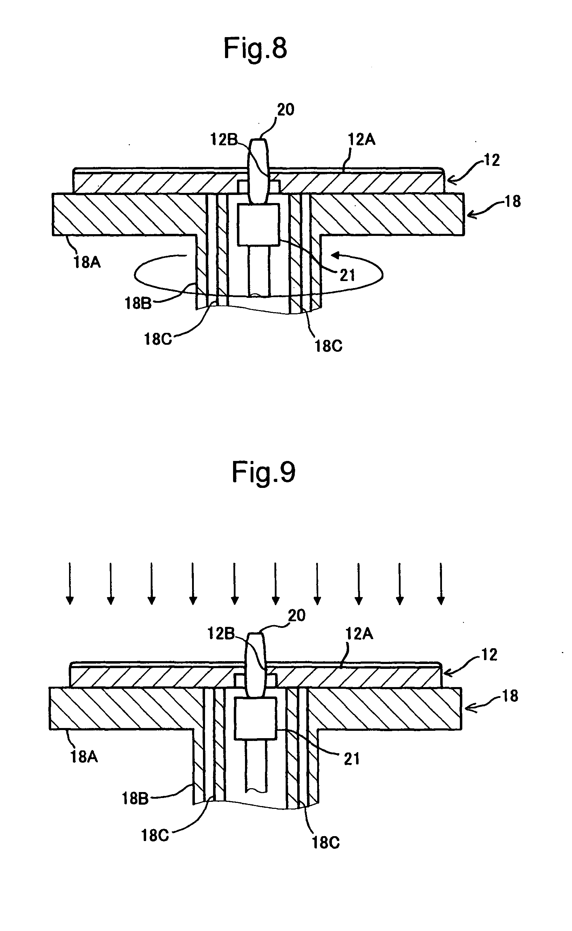

In this manner, as shown in Fig. 8, the light transmitting layer 14 is spread over the information recording surface 12A with a uniform thickness of approximately 0.1 mm (Step S108).

Then, as shown in Fig. 9, the rotation of the rotating table 18 is stopped, and the light transmitting layer 14 thus spread is uniformly irradiated with UV rays, so that the light transmitting layer 14 is cured (Step S110).

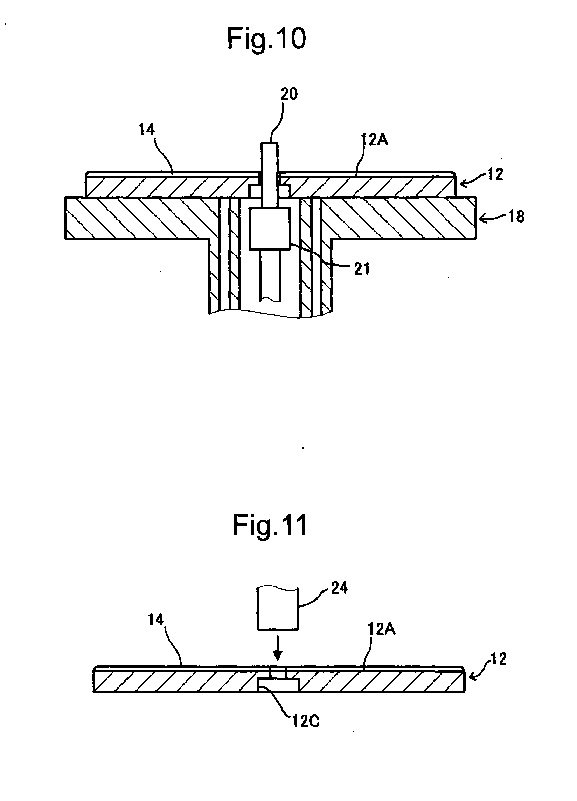

Then, as shown in Fig. 10, the supply of the negative pressure to the vent hole 18C is stopped and the core member 20 is released from the compressed state by the compression/release mechanism 21, thereby the substrate 12 is removed from the rotating table 18 and the core member 20 (Step S112). Since the core member 20 is formed of rubber or the like, it is hard to adhere to the light transmitting layer 14. Therefore, it is possible to easily remove the substrate 12 from the core member 20.

Next as shown in Fig. 11, a jig 22 is fitted into the manufacturing hole 12B so as to position the substrate 12. Then, a circular tool 24 having an outer diameter equal to the inner diameter of the central hole 10A is arranged concentrically with respect to the substrate 12, and is brought into contact with the substrate 12 in the axial direction and is penetrated through the substrate 12 so as to punch out a hole in the substrate 12. Thus, the central hole 10A is formed (Step S114). Since the substrate 12 has the circular concave portion 12C having the inner diameter equal to that of the central hole 10A, the punching of the central hole can be easily done.

In this manner, the manufacturing of the optical recording medium 10 is finished.

In the exemplary embodiment, the core member 20 is a round bar that has elasticity and has an outer diameter slightly smaller than the inner diameter of the manufacturing hole 12B in its original state, and can be freely fitted into the manufacturing hole 12B. However, as long as the core member can come into close contact with the inner circumference of the manufacturing hole 12B, there is no restriction to the material and shape of the core member.

Moreover, in the exemplary embodiment, the substrate is formed by injection molding, which includes the circular concave portion 12C having the same inner diameter as that of the central hole (that has the inner diameter larger than that of the manufacturing hole 12B), in the opposite surface to the information recording surface 12A. However, the substrate 12 in which the opposite surface to the information recording surface 12A is flat may be formed by injection molding.

In addition, in the exemplary embodiment, acrylic UV curable resin and epoxy UV curable resin are described as examples of the material for the light transmitting layer 14. However, a thermosetting resin, a two-component curing resin or other types of radiation curable resin that can be cured by other types of radiation, such as an electron beam, can be used as the material for the light transmitting layer 14, as long as it can transmit light.

Furthermore, in the exemplary embodiment, the optical recording medium 10 is a single-sided type in which information can be recorded on one surface only. However, the exemplary embodiment of the present invention can also be applied to a double-sided optical recording medium in which information can be recorded on both surfaces. In this case, by setting the thickness of the substrate to approximately 1.0 mm and forming the light transmitting layer having a thickness of approximately 0.1 mm on both surfaces of the substrate, the optical recording medium having a total thickness of 1.2 mm can be obtained.

### (Examples)

In a manner described in the above exemplary embodiment, ten substrates 12 were molded for each of respective 10 inner diameters of the manufacturing hole 12B, i.e., 2 mm, 4 mm, 5 mm, 6 mm, 7 mm, 8 mm, 9 mm, 10 mm, 12 mm and 14 mm, so that a total of 100 substrates 12 were molded. For each substrate 12, a resin was spread on the information recording surface 12A of the substrate 12 under a condition of spin-coating in which revolutions per minute of the turntable 18 was approximately 2000 rpm. Then, the resin was exposed to UV rays, thereby being cured to form a light transmitting layer 14. In this manner, 100 optical recording media 10 were fabricated. In this manufacturing, the following materials were used for the light transmitting layer 14.

ART RESIN® UN-5200 (manufactured by Negami Chemical Industrial Co., Ltd.): 77 wt%

ARONIX® M-315 (manufactured by Toagosei Co., Ltd.): 10 wt%

THF-A (manufactured by Kyoeisha Chemical Co., Ltd.): 10 wt%

Irgacure® 184 (manufactured by Ciba Specialty Chemicals K. K.): 3 wt%

Viscosity of the resin before curing: 6800 mPa·s

For each of the thus obtained 100 optical recording media 10, the thickness of the light transmitting layer 14 was measured at 1140 points in a region of 22-58 mm from the center with approximately 2 mm intervals in the radial direction and with approximately 6 degrees intervals in the circumferential direction by means of a thickness measuring device Core 9930a (manufactured by cores Co., Ltd.).

In addition, for each of the thus obtained 100 optical recording media 10, the appearance of the light transmitting layer 14 was visually checked.

Table 1 shows an average of the thickness of the light transmitting layers 14 on the respective optical recording media 10 and a difference between the minimum thickness and the maximum thickness thereof, for each inner diameter of the manufacturing hole 12B. The average and difference of the thickness in Table 1 are averaged values of ten optical recording media 10 having the manufacturing holes 12B of the same inner diameter. In addition, the optical recording media 10 in which the light transmitting layers 14 looked good are shown with "o" for the respective inner diameters of the manufacturing hole 12B in Table 1. Please not that "o" represents that the light transmitting layer 14 looked good for all the ten optical recording media 10 having the manufacturing holes 12B of the same inner diameter. Moreover, a time required for spin-coating was longer as the inner diameter of the manufacturing hole 12B was smaller. That is, the time required for spin-coating was varied depending on the inner diameter of the manufacturing hole 12B. Thus, that time is shown for each inner diameter in Table 1 for reference.

As shown in Table 1, it was confirmed that the difference of the thickness of the light transmitting layer 14 became smaller as the inner diameter of the manufacturing hole 12B was smaller. In addition, in the optical recording media 10 in which the inner diameters of the manufacturing holes 12B were 10 mm or less, it was confirmed that the difference of the thickness of the light transmitting layer 14 was suppressed to 4 µm or less and the quality was good. Moreover, in a case where the inner diameter of the manufacturing hole 12B was 8 mm or less, it was confirmed that the difference of the thickness was suppressed to 3 µm or less and the quality was better.

Furthermore, in all the 100 optical recording media 10 of this example, the light transmitting layers 14 had good appearance.

**[Table 1]**

| Inner diameter of manufacturing hole (mm) | Average of thickness of light transmitting layer (µm) | Difference of thickness of light transmitting layer (µm) | Time required for spin-coating (SEC) | Appearance of light transmitting layer |
|---|---|---|---|---|
| 2 | 99.9 | 0.71 | 10.5 | ○ |
| 4 | 99.9 | 0.71 | 10.5 | ○ |
| 5 | 99.9 | 0.71 | 10.5 | ○ |
| 6 | 100.1 | 1.82 | 10.3 | ○ |
| 7 | 100.0 | 1.99 | 10.3 | ○ |
| 8 | 99.6 | 2.55 | 10.3 | ○ |
| 9 | 100.7 | 3.20 | 10.0 | ○ |
| 10 | 100.3 | 3.84 | 10.0 | ○ |
| 12 | 99.8 | 4.53 | 10.0 | ○ |
| 14 | 100.0 | 6.61 | 9.7 | ○ |

### (Comparative Example)

100 optical recording media 10 were fabricated under the same condition as that of the above example except for the following points. While the core member 20 was not brought into close contact with the inner circumference of the manufacturing hole 12B and therefore there was a gap between the inner circumference of the manufacturing hole 12B and the core member 20, the resin was spread on the information recording surface 12A of the substrate 12. Then, the resin was cured by being exposed to UV rays, thereby forming the light transmitting layer 14. For each of the thus fabricated 100 optical recording media 10, the thickness of the light transmitting layer 14 was measured. In addition, for each of the 100 optical recording media 10, the appearance of the light transmitting layer 14 was also visually checked.

Table 2 shows, for each of the inner diameters of the manufacturing hole 12B, the average of the thickness of the light transmitting layers 14 on the respective optical recording media 10 and the difference between the minimum thickness and the maximum thickness thereof. In addition, for each of the inner diameters of the manufacturing hole 12B, the optical recording media 10 having the light transmitting layers 14 that looked good are shown with "o," whereas the optical recording media 10 having the light transmitting layers 14 that did not look good are shown with "×" in table 2.

Please note that "o" represents that the appearance of the light transmitting layer 14 is good for all the ten optical recording media 10 having the manufacturing holes 12B of the same inner diameter while "×" represents that the appearance of the light transmitting layer 14 is not good for a part or all of the ten optical recording media 10 having the manufacturing holes 12B of the same inner diameter.

As shown in Table 2, it was confirmed that the difference of the thickness of the light transmitting layer 14 became smaller as the inner diameter of the manufacturing hole 12B was smaller, as in the above example. Moreover, it was confirmed that, in the optical recording media 10 in which the inner diameters of the manufacturing holes 12B are 8 mm or less, the difference of the thickness of the light transmitting layer 14 was suppressed to 4 µm or less and the quality was good. Furthermore, it was confirmed that, in a case where the inner diameter of the manufacturing hole 12B is 6 mm or less, the difference of the thickness was suppressed to 3 µm or less and the quality was better.

Moreover, for the same inner diameter of the manufacturing hole 12B, it was confirmed that the difference of the thickness of the light transmitting layer 14 tended to be smaller in a case where the core member 20 was in close contact with the inner circumference of the manufacturing hole 12B (Example) than in a case where the core member 20 was not in close contact with the inner circumference of the manufacturing hole 12B (Comparative Example).

Furthermore, when the inner diameter of the manufacturing hole 12B was 10 mm or less, streaks were formed radially in the light transmitting layer 14 in the vicinity of the manufacturing hole and therefore the appearance of the light transmitting layer 14 was not good. Those streaks were formed to reach a portion outside a portion of ϕ = 15 mm in the radial direction. Thus, after the central hole 10A was formed, the streaks remained. It is considered that such streaks are formed because the resin enters a gap between the inner circumference of the manufacturing hole 12B and the core member and then flows out of the gap onto the substrate 12 due to centrifugal force applied by spin-coating. In addition, in thirty optical recording media 10 each having the manufacturing hole 12B of the inner diameter of 10 mm or larger, the appearance of the light transmitting layers 14 was good.

**[Table 2]**

| Inner diameter of manufacturing hole (mm) | Average of thickness of light transmitting layer (µm) | Difference of thickness of light transmitting layer (µm) | Time required for spin-coating (SEC) | Appearance of light transmitting layer |
|---|---|---|---|---|
| 2 | 99.9 | 0.71 | 10.5 | × |
| 4 | 100.1 | 1.82 | 10.3 | × |
| 5 | 100.0 | 1.99 | 10.3 | × |
| 6 | 99.6 | 2.55 | 10.3 | × |
| 7 | 100.7 | 3.20 | 10.0 | × |
| 8 | 100.3 | 3.84 | 10.0 | × |
| 9 | 99.8 | 4.53 | 10.0 | × |
| 10 | 100.0 | 6.61 | 9.7 | ○ |
| 12 | 99.7 | 8.66 | 9.5 | ○ |
| 14 | 99.9 | 10.99 | 9.2 | ○ |

The various exemplary embodiments of the present invention can be used for forming a light transmitting layer, that is thinner than a substrate of an optical recording medium, to have a uniform thickness.

## Claims

1. A method for manufacturing an optical recording medium (10) including a substrate (12) having at least one surface serving as an information recording surface (12A), and a light transmitting layer (14) that is thinner than the substrate (12) and is formed on the information recording surface (12A), the optical recording medium (10) having a central hole (10A), the method comprising the steps of:
horizontally arranging a substrate (12) having a manufacturing hole (12B) that is formed at a center thereof and has a smaller inner diameter than that of the central hole (10A) with the information recording surface (12A) faced up, fitting a core member (20) into the manufacturing hole (12B) to bring the core member (20) into close contact with an inner circumference of the manufacturing hole (12B), supplying a radiation curable resin that is fluid and is able to transmit light to a region around the core member (20), and rotating the substrate (12), thereby causing the radiation curable resin to flow outward in a radial direction by centrifugal force to spread a light transmitting layer (14) on the information recording surface (12A);
curing the spread light transmitting layer by irradiation of radiation; and
removing the core member (20) from the manufacturing hole (12B) and forming the central hole (10A).

2. The method for manufacturing an optical recording medium according to claim 1, wherein
the core member (20) has elasticity and has a shape that allows the core member (20) to be fitted into the manufacturing hole (12B) freely in its original state, and the core member (20) is brought into close contact with the inner circumference of the manufacturing hole (12B) by being elastically deformed.

3. The method for manufacturing an optical recording medium according to claim 1 or 2, wherein
the manufacturing hole (12B) has an inner diameter of 10 mm or less.

4. The method for manufacturing an optical recording medium according to claim 1 or 2, wherein
the manufacturing hole (12B) has an inner diameter of 8 mm or less.

5. The method for manufacturing an optical recording medium according to any one of claims 1 to 4, wherein
the manufacturing hole (12B) has the inner diameter of 3 mm or more.
